# EUROPEAN PATENT SPECIFICATION

(11) **EP 2 039 660 B1**
(45) Date of publication and mention of the grant of the patent: **02.01.2013**
(21) Application number: 07767557.7
(22) Date of filing: 26.06.2007
(51) Int. Cl.: F27B 7/20, C02F 11/12, F26B 17/10, F23G 5/02

(54) **CEMENT CALCINATION APPARATUS AND METHOD OF DRYING HIGHLY HYDROUS ORGANIC WASTE**
ZEMENTKALZINIERUNGSVORRICHTUNG UND VERFAHREN ZUM TROCKNEN VON STARK WASSERHALTIGEM ORGANISCHEM ABFALL
APPAREIL DE CALCINATION DU CIMENT ET PROCÉDÉ D'ASSÈCHEMENT DE DÉCHETS ORGANIQUES EXTRÊMEMENT AQUEUX

(30) Priority: 28.06.2006 JP 2006177618; 15.02.2007 JP 2007034206
(43) Date of publication of application: 25.03.2009
(73) Proprietor: TAIHEIYO CEMENT CORPORATION, Tokyo 104-8518 (JP)
(72) Inventor: UENO, Naoki, Tokyo 104-8518 (JP); IZAWA, Yoshihito, Tokyo 104-8518 (JP); TAKANO, Hiroyuki, Sakura-shi, Chiba 285-8655 (JP); MORI, Hirofumi, Tokyo 104-8518 (JP)
(74) Representative: Isarpatent
(86) International application number: PCT/JP2007/062751
(87) International publication number: WO 2008/001746

(56) References cited:
- JP-A- 09 227 184
- JP-A- 62 283 850
- JP-A- 63 151 650
- JP-A- 2002 273 480
- JP-A- 2005 097 063

## Description

### TECHNICAL FIELD

The present invention relates to a cement burning apparatus capable of safely and efficiently drying high-water-content organic waste such as high-water-content organic sludge and a method of drying high-water-content organic waste utilizing the apparatus.

### BACKGROUND ART

Conventionally, variety of apparatus and methods for treating waste such as city garbage in cement burning apparatus has been proposed. For instance, in JP 63-151650 is disclosed a technology, in which a part of hot air from a clinker cooler is introduced to a dryer for drying waste such as city garbage; gas exhausted from the dryer is returned to the clinker cooler; and the hot air, with which the exhaust gas is mixed, from the clinker cooler is used as air for combustion in a cement kiln or a calciner.

Further, in the JP 2003-506299, patent document, a technology for burning combustible waste in cement burning apparatus is disclosed. In this technology, combustible waste is burned with a part of hot air from a clinker cooler; exhaust gas generated in a waste burning process is aerated to a preheater for heating cement raw material; and slug generated in the waste burning process is extracted.

### DISCLOSURE OF THE INVENTION

### PROBLEMS TO BE SOLVED BY THE INVENTION

However, as described in the above patent documents, the hot air extracted from the clinker cooler can be utilized for drying waste such as city garbage, combustible waste and the like without causing any trouble, but when the hot air is utilized for drying high-water-content organic waste such as high-water-content-organic sludge, oxygen concentration of the hot air is high so that there is a danger of explosion.

In addition, even if combustion exhaust gas downstream from the exit of a preheater of a cement burning apparatus was tried to be utilized, since temperature of the combustion exhaust gas in the range was low, that is, 450°C or less, the gas would not be suitable to dry the high-water-content sludge.

Further, gas extracted from the inlet end of a cement kiln is low in oxygen concentration and high in temperature, that is, approximately 1000°C, so that it is suitable to dry the high-water-content organic waste, but extraction of the combustion gas from the inlet end causes a problem that thermal efficiency of the cement kiln decreases.

In addition, since dry exhaust gas that is generated after organic sludge and the like are dried includes a great deal of odorous component, it is necessary to discharge it after deodorization treatment. In order to perform the deodorization treatment, temperature of the gas including odorous component is preferably adjusted to 800°C or more and the deodorization treatment is generally performed by introducing the gas to a combustion range such as a calciner. But, when gas exhausted from a cement kiln is utilized for drying the organic sludge and the like, and dry exhaust gas is treated in the above range, since the oxygen concentration of the dry exhaust gas is low, combustion state is degenerated and thermal efficiency of the cement kiln decreases, therefore, the gas exhausted from a cement kiln is not suitable to dry organic sludge and the like.

In addition to the above, the high-water-content organic sludge shapes clumps including 40 mass percent of water or more like clay and its specific surface area is small, which makes it difficult to efficiently dry the organic sludge.

JP 2005 097063 A describes a method for treating organic waste. In this method an apparatus for drying or carbonizing the organic waste by a high temperature gas discharged from a cement firing process is provided and the dried material or the carbonized material after being treated in the apparatus is utilized in the cement firing process. The high temperature gas is preferably extracted from an outlet waste gas of a rotary kiln in the cement firing process.

The present invention has been made in consideration of the above problems in the conventional art, and the object thereof is to provide a cement burning apparatus and a method of drying high-water-content organic waste precluding the possibility of explosion of the dryer and the like; not causing decreased thermal efficiency of a cement kiln; and more efficiently drying high-water-content organic waste.

### MEANS FOR SOLVING PROBLEMS

To achieve the above object, the present invention provides the cement burning apparatus with the features of claim 1 and the method for drying high-content organic waste with the features of claim 4.[0013] Oxygen concentration of the combustion gas extracted from the exhaust gas passage, which runs from the outlet duct of the calciner to the outlet duct of the cyclone immediately below the highest cyclone of the preheater of the cement kiln is low, that is, 2 to 8 percent, so that there is no danger of explosion of the dryer, and since temperature of the combustion gas is 550 to 900°C, the high-water-content organic waste can sufficiently be dried. In addition, combustion gas is not extracted from an inlet end or the like of the cement kiln, so that thermal efficiency of the cement kiln is not decreased.

In the above cement burning apparatus, the dryer can be a grinding-type flash dryer, to which the combustion gas is fed so as to directly be contacted with the high-water-content organic waste, for drying the organic waste while grinding it. With this, improved drying efficiency through increased specific surface area of the high-water-content organic waste and improved grinding efficient through superficial drying of the high-water-content organic waste can between them exponentially improve overall drying efficiency.

In the above cement burning apparatus, it is possible to mount a second exhaust gas passage for returning exhaust gas from the dryer to the exhaust gas passage, which runs from the outlet duct of the calciner to the outlet duct of the cyclone immediately below the highest cyclone of the preheater of the cement kiln. With this second exhaust gas passage, it becomes unnecessary to introduce dry exhaust gas with low oxygen concentration and odorous component to a combustion range such as a calciner and perform deodorization treatment, so that thermal efficiency of the cement kiln is not degenerated.

In the above method of drying high-water-content organic waste, the part of the combustion gas may directly be contacted with the high-water-content organic waste, and the organic waste can be dried while being ground. With this, as described above, overall drying efficiency can exponentially be improved.

The above method of drying high-water-content organic waste may further comprise a step of returning gas after drying the high-water-content organic waste to an exhaust gas passage, which runs from the outlet duct of the calciner to the outlet duct of the cyclone immediately below the highest cyclone of the preheater of the cement kiln. With this method, as described above, the dry exhaust gas including the odorous component can be treated without degenerating thermal efficiency of the cement kiln.

In the above method of drying high-water-content organic waste, the high-water-content organic waste may be high-water-content organic sludge such as paper sludge, sewerage sludge, building pit sewerage sludge and food sludge.

### EFFECT OF THE INVENTION

As described above, with the present invention, it is possible to provide a cement burning apparatus and a method of drying high-water-content organic waste, which can preclude the possibility of explosion; prevent decreased thermal efficiency of the cement kiln; and more efficiently dry high-water-content organic waste.

### THE BEST MODE TO CARRY OUT THE INVENTION

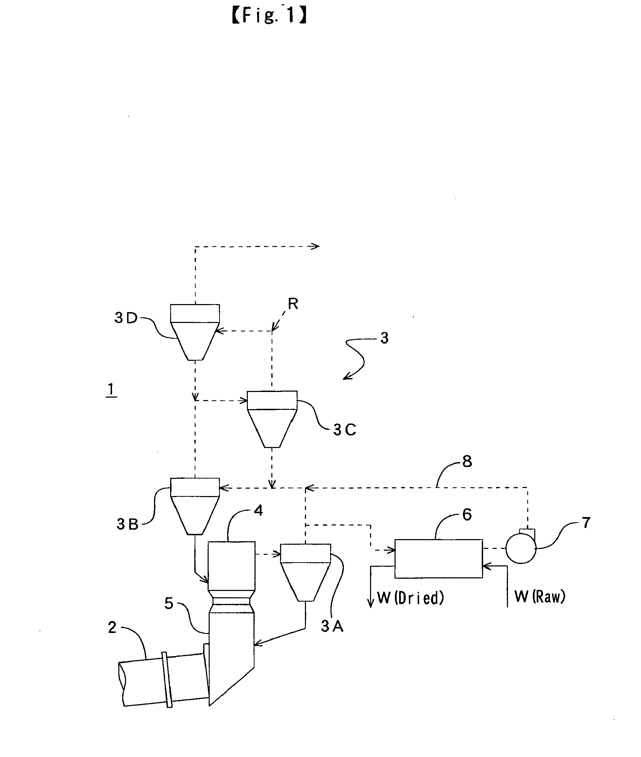

Figure 1 shows a cement burning apparatus according to an embodiment of the present invention, this cement burning apparatus 1 comprises a cement kiln 2, a preheater 3, a calciner 4, a dryer 6, a fan 7 and others.

The cement kiln 2, the preheater 3 and the calciner 4 have the same construction as conventional cement burning apparatus, and cement raw material R fed to the preheater 3 is preheated in the preheater 3; calcined in the calciner 4; and burned in the cement kiln 2.

To the dryer 6 is fed high-water-content organic waste (hereinafter referred to as "waste") W such as high-water-content organic sludge, and to the dryer 6 is fed combustion gas extracted from an exhaust gas passage running from the lowest cyclone 3A to the second cyclone 3B to dry the waste W. The combustion gas is low in oxygen concentration, that is, approximately 2 to 8 percent, so that there is no danger of explosion of the dryer 6. In addition, temperature of the combustion gas is approximately 800 to 900 °C, which allows the high-water-content organic waste to sufficiently be dried. The dried waste W may be treated in and out of the cement burning apparatus 1.

The fan 7 is installed to introduce combustion gas from the preheater 3 to the dryer 6 and exhaust gas from the fan 7 is returned to the exhaust gas passage, which runs from the lowest cyclone 3A to the second cyclone 3B via a circulation duct 8. With this, odorous component included in dry exhaust gas generated after drying organic sludge and the like is subject to a deodorization treatment.

Meanwhile, although in the embodiment described above, the gas extracted from the exhaust gas passage, which runs from the lowest cyclone 3A to the second cyclone 3B, is fed to the dryer 6, combustion gases extracted from exhaust gas passages upstream from the second cyclone 3B of the preheater 3, which run from the second cyclone 3B to the third cyclone 3C (temperature of the combustion gas is approximately 700 to 800°C) and from the third cyclone 3C to the forth cyclone 3D (temperature of the combustion gas is approximately 550 to 650°C) can be fed to the dryer 6. Further, the area, to which dry exhaust gas from the dryer 6 is returned, is not limited to the exhaust gas passage, which runs from the lowest cyclone 3A to the second cyclone 3B, and the dry exhaust gas can be returned to the same area as in the case that the combustion gas described above is extracted.

### EMBODIMENT EXAMPLE

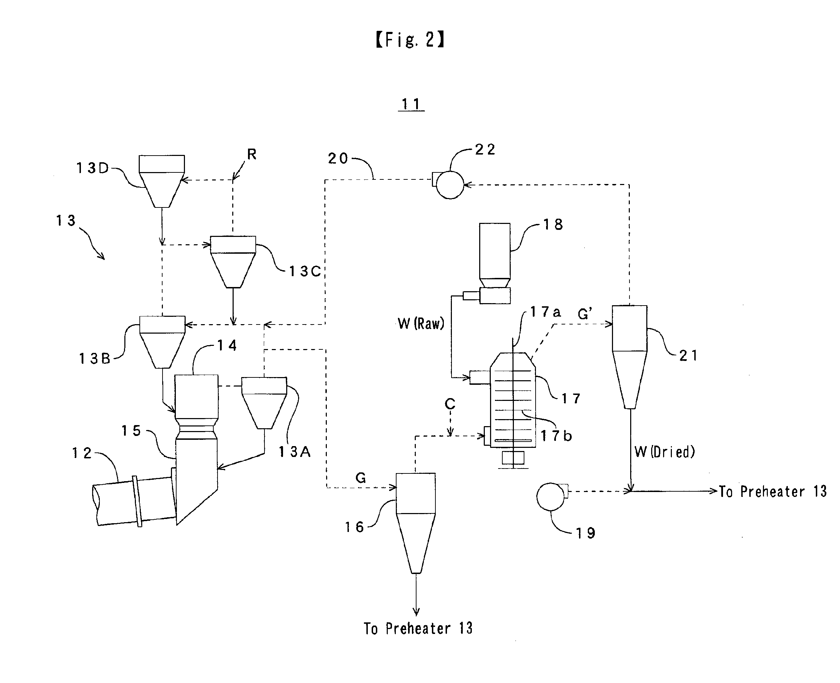

Figure 2 shows a cement burning apparatus according to an embodiment example of the present invention, this cement burning apparatus 11 comprises a cement kiln 12, a preheater 13, a calciner 14, a cement-raw-material recovery cyclone 16, a grinding-type flash dryer 17, a high-water-content organic waste storage tank (hereinafter referred to as "waste storage tank") 18, a dried-organic-waste recovery cyclone (hereinafter referred to as "dried-material recovery cyclone") 21 and so on. In this connection, since the cement kiln 12, the preheater 13 and the calciner 14 have the same construction as conventional cement burning apparatus, detailed explanation thereof will be omitted.

The cement-raw-material recovery cyclone 16 is installed upstream from the grinding-type flash dryer 17 to remove dust included in combustion gas G extracted from the exhaust passage of the preheater 13 and to feed the combustion gas G of which dust is removed to the grinding-type flash dryer 17.

The grinding-type flash dryer 17 is installed to dry high-water-content organic waste (hereinafter referred to as "waste" according to circumstances) W such as high-water-content organic sludge fed from the waste storage tank 18 with the combustion gas G fed from the cement-raw-material recovery cyclone 16 while grinding the waste W. This grinding-type flash dryer 17 is provided with a feed opening for the waste W in the upper portion thereof and a feed opening for the combustion gas G from the cement-raw-material recovery cyclone 16 in the lower portion thereof, and the waste W and the combustion gas G are counter-currently contacted with each other. Further, in the grinding-type flash dryer 17 are installed a rotation shaft 17a and strike chains 17b, which are fixed to the rotation shaft 17a and horizontally extend and rotate through centrifugal force together with the rotation of the rotation shaft 17a to grind the waste W.

The waste storage tank 18 is installed to temporarily store the high-water-content organic waste and the high-water-content organic waste can be high-water-content organic sludge such as paper sludge, sewerage sludge, building pit sewerage sludge and food sludge.

A blower 19 is installed to transport the waste W ground and dried by the grinding-type flash dryer 17 to the preheater 13, and a roots blower or the like is utilized. A fan 22 is installed to return dry exhaust gas G' discharged from the grinding-type flash dryer 17 via a circulation duct 20 to the preheater 13.

Next, the motion of the cement burning apparatus 11 with the above construction will be explained with reference to figures.

Cement raw material R is fed to the preheater 13 of the cement burning apparatus 11, and the raw material R is preheated in the preheater 13; calcined in the calciner 14; and burned in the cement kiln 12. On the other hand, received waste W is temporarily stored in the waste storage tank 18.

The fan 22 is operated to introduce the combustion gas G of the cement kiln 12 to the cement-raw-material recovery cyclone 16, and dust included in the combustion gas G is recovered. The recovered dust is returned to the preheater 13, and the combustion gas G from which the dust is recovered is fed to the grinding-type flash dryer 17.

The waste W from the waste storage tank 18 is fed to the upper portion of the grinding-type flash dryer 17, and the combustion gas G from the cement-raw-material recovery cyclone 16 is introduced to the lower portion of the grinding-type flash dryer 17. Since temperature of this combustion gas G is approximately 800 to 900°C, high-water-content organic waste can sufficiently be dried. In addition, in the grinding-type flash dryer 17, the waste W and the combustion gas G is directly and counter-currently contacted with each other, and the waste W is dried while being ground by strike chains 17b arranged in the grinding-type flash dryer 17, the waste W is dried from its surface with specific surface area thereof increasing. As a result, in addition to improved drying efficiency due to the increase of the specific surface area, grinding efficiency is also improved due to the dried surface of the waste W, resulting in exponential improvement in overall drying efficiency in comparison to conventional devices. Besides, oxygen concentration of the combustion gas G introduced in the grinding-type flash dryer 17 is low, that is, approximately 2 to 8 percent, so that there is no danger of explosion of the grinding-type flash dryer 17 and others.

Here, in case that outlet gas temperature of the grinding-type flash dryer 17 is too high, which may caused by temporary decrease of the quantity of the waste W to the grinding-type flash dryer 17, cooling air C can be introduced upstream from the grinding-type flash dryer 17.

Next, with the dried-material recovery cyclone 21, the ground and dried waste W by the grinding-type flash dryer 17 is recovered, and is returned to the preheater 13 by operating the blower 19. In addition, the recovered waste W can be transported by the blower 19 to apparatus other than the cement burning apparatus 11, and the waste W can be treated by the apparatus.

On the other hand, the dry exhaust gas G' discharged from the grinding-type flash dryer 17 is returned to an exhaust gas passage, which runs from the lowest cyclone 13A to the second cyclone 13B, through the circulation duct 20 by the fan 22. With this, odorous component included in the dry exhaust gas G' generated after organic sludge and the like is dried can be subject to deodorization treatment.

Meanwhile, although in the embodiment example described above, the combustion gas G extracted from the exhaust gas passage, which runs from the lowest cyclone 13A to the second cyclone 13B, is fed to the grinding-type flash dryer 17, combustion gases extracted from exhaust gas passages upstream from the second cyclone 13B of the preheater 13, which run from the second cyclone 13B to the third cyclone 13C (temperature of the combustion gas is approximately 700 to 800°C) and from the third cyclone 13C to the forth cyclone 13D (temperature of the combustion gas is approximately 550 to 650°C) can be fed to the grinding-type flash dryer 17.

Further, as to the dry exhaust gas G' also, it is not limited that the gas G' is returned to the exhaust gas passage, which runs from the lowest cyclone 3A to the second cyclone 3B, but the gas G' can be returned to the same area as in the case that the combustion gas G described above is extracted.

### BRIEF EXPLANATION OF DRAWINGS

[Figure 1] An outline view showing overall construction of the cement burning apparatus according to an embodiment of the present invention.
[Figure 2] An outline view showing overall construction of the cement burning apparatus according to an embodiment example of the present invention.

### EXPLANATION OF SIGNALS

1 cement burning apparatus
2 cement kiln
3 preheater
3A lowest cyclone
3B second cyclone
3C third cyclone
3D forth cyclone
4 calciner
5 kiln inlet end
6 dryer
7 fan
8 circulation duct
11 cement burning apparatus
12 cement kiln
13 preheater
13A lowest cyclone
13B second cyclone
13C third cyclone
13D forth cyclone
14 calciner
15 kiln inlet end
16 cement-raw-material recovery cyclone
17 grinding-type flash dryer
17a rotation shaft
17b strike chains
18 waste storage tank
19 blower
20 circulation duct
21 dried-material recovery cyclone
22 fan
C cooling air
G combustion gas
G' dry exhaust gas
R cement raw material
W high-water-content organic waste (high-water-content organic sludge)

## Claims

1. Cement burning apparatus (1, 11) comprising a dryer (6, 17), to which combustion gas (G) is fed from an exhaust gas passage, which runs from an outlet duct of a calciner (4, 14) to an outlet duct of a cyclone (3C, 13C) immediately below a highest cyclone (3D, 13D) of a preheater (3, 13) of a cement kiln (2, 12), for drying high-water-content organic waste (W) of which water content is 40 mass percent or more by using said combustion gas (G).

2. Cement burning apparatus (1, 11) as claimed in claim 1, wherein said dryer (17) is a grinding-type flash dryer (17), to which the combustion gas (G) is fed so as to directly be contacted with the high-water-content organic waste (W), for drying the organic waste (W) while grinding it.

3. Cement burning apparatus (1, 11) as claimed in claim 1 or 2, further comprising a second exhaust gas passage (8, 20) for returning exhaust gas (G') from the dryer (6, 17) to the exhaust gas passage, which runs from the outlet duct of the calciner (4, 14) to the outlet duct of the cyclone (3C, 13C) immediately below a highest cyclone (3D, 13D) of the preheater (3, 13) of the cement kiln (2, 12).

4. Method of drying high-water-content organic waste (W) comprising the steps of:
extracting a part of combustion gas (G) from an exhaust gas passage, which runs from an outlet duct of a calciner (4, 14) to an outlet duct of a cyclone (3C, 13C) immediately below a highest cyclone (3D, 13D) of a preheater (3, 13) of a cement kiln (2, 12); and
drying high-water-content organic waste (W) of which water content is 40 mass percent or more by utilizing said part of the extracted gas.

5. Method of drying high-water-content organic waste (W) as claimed in claim 4, wherein said part of the combustion gas (G) is directly contacted with the high-water-content organic waste (W), and the organic waste (W) is dried while being ground.

6. Method of drying high-water-content organic waste (W) as claimed in claim 4 or 5, further comprising a step of returning gas (G') after drying said high-water-content organic waste (W) to an exhaust gas passage (8, 20), which runs from the outlet duct of the calciner (4, 14) to the outlet duct of the cyclone (3C, 13C) immediately below the highest cyclone (3D, 13D) of the preheater (3, 13) of the cement kiln (2, 12).

7. The method of drying high-water-content organic waste (W) as claimed in claim 4, 5 or 6, wherein said high-water-content organic waste (W) is high-water-content organic sludge.

## Patentansprüche

1. Zementbrennanlage (1, 11), die einen Trockner (6, 17) umfasst, in den Verbrennungsgas (G) aus einem Abgasdurchgang eingeleitet wird, der von einem Auslasskanal einer Kalzinierungseinrichtung (4, 14) zu einem Auslasskanal eines Zyklons (3C, 13C) unmittelbar unterhalb eines höchsten Zyklons (3D, 13D) einer Vorwärmeinrichtung (3, 13) eines Zementbrennofens (2, 12) verläuft, um stark wasserhaltigen organischen Abfall (W), dessen Wassergehalt mindestens 40 Masseprozent beträgt, mit Hilfe des Verbrennungsgases (G) zu trocknen.

2. Zementbrennanlage (1, 11) nach Anspruch 1, wobei der Trockner (17) ein Mahl-Flashtrockner (17) ist, in den das Verbrennungsgas (G) so eingeleitet wird, dass es direkten Kontakt mit dem stark wasserhaltigen organischen Abfall (W) hat, um den organischen Abfall (W) zu trocknen, während er gemahlen wird.

3. Zementbrennanlage (1, 11) nach Anspruch 1 oder 2, die des Weiteren einen zweiten Abgasdurchgang (8, 20) zum Rückführen von Abgas (G') aus dem Trockner (6, 17) zu dem Abgasdurchgang umfasst, der von dem Auslasskanal der Kalzinierungseinrichtung (4, 14) zu dem Auslasskanal des Zyklons (3C, 13C) unmittelbar unterhalb eines höchsten Zyklons (3D, 13D) der Vorwärmeinrichtung (3, 13) des Zementbrennofens (2, 12) verläuft.

4. Verfahren zum Trocknen von stark wasserhaltigem organischem Abfall (W), das folgende Schritte umfasst:
- Abziehen eines Teils des Verbrennungsgases (G) aus einem Abgasdurchgang, der aus einem Auslasskanal einer Kalzinierungseinrichtung (4, 14) zu einem Auslasskanal einer Zyklons (3 C, 13C) unmittelbar unterhalb eines höchsten Zyklons (3D, 13D) einer Vorwärmeinrichtung (3, 13) eines Zementbrennofens (2, 12) verläuft; und
- Trocknen von stark wasserhaltigem organischem Abfall (W), dessen Wassergehalt mindestens 40 Masseprozent beträgt, mit Hilfe des Teils des abgezogenen Gases.

5. Verfahren zum Trocknen von stark wasserhaltigem organischem Abfall (W) nach Anspruch 4, wobei der Teil des Verbrennungsgases (G) in direkten Kontakt mit dem stark wasserhaltigen organischen Abfall (W) gebracht wird und der organische Abfall (W) getrocknet wird, während er gemahlen wird.

6. Verfahren zum Trocknen von stark wasserhaltigem organischem Abfall (W) nach Anspruch 4 oder 5, das des Weiteren einen Schritt umfasst, Gas (G') nach dem Trocknen des stark wasserhaltigen organischen Abfalls (W) zu einem Abgasdurchgang (8, 20) zurückzuführen, der von dem Auslasskanal der Kalzinierungseinrichtung (4, 14) zu dem Auslasskanal des Zyklons (3 C, 13C) unmittelbar unterhalb des höchsten Zyklons (3D, 13D) der Vorwärmeinrichtung (3, 13) des Zementbrennofens (2, 12) verläuft.

7. Verfahren zum Trocknen von stark wasserhaltigem organischem Abfall (W) nach Anspruch 4, 5 oder 6, wobei der stark wasserhaltige organische Abfall (W) stark wasserhaltiger organischer Schlamm ist.

## Revendications

1. Appareil de combustion du ciment (1, 11) comprenant un dispositif d'assèchement (6, 17), alimenté en gaz de combustion (G) à partir d'un conduit de gaz d'échappement, qui s'étend d'un conduit d'évacuation d'un dispositif de calcination (4, 14) à un conduit d'évacuation d'un cyclone (3C, 13C) immédiatement sous un cyclone supérieur (3D, 13D) d'un préchauffeur (3, 13) d'un four à ciment (2, 12), pour assécher des déchets organiques extrêmement aqueux (W) dont la teneur en eau est égale ou supérieure à 40 % en masse en utilisant ledit gaz de combustion (G).

2. Appareil de combustion du ciment (1, 11) selon la revendication 1, dans lequel ledit dispositif d'assèchement (17) est un four sécheur à jet d'air à écrasement (17), auquel le gaz de combustion (G) est envoyé de manière à être en contact direct avec les déchets organiques extrêmement aqueux (W), pour assécher les déchets organiques (W) pendant qu'ils sont écrasés.

3. Appareil de combustion du ciment (1, 11) selon la revendication 1 ou 2, comprenant un second conduit de gaz d'échappement (8, 20) pour renvoyer le gaz d'échappement (G') du dispositif d'assèchement (6, 17) au conduit de gaz d'échappement, qui s'étend du conduit d'évacuation du dispositif de calcination (4, 14) au conduit d'évacuation du cyclone (3C, 13C) immédiatement sous un cyclone supérieur (3D, 13D) du préchauffeur (3, 13) du four à ciment (2, 12).

4. Procédé d'assèchement de déchets organiques extrêmement aqueux (W) comprenant les étapes de :
- extraction d'une partie du gaz de combustion (G) hors d'un conduit de gaz d'échappement, qui s'étend d'un conduit d'évacuation d'un dispositif de calcination (4, 14) à un conduit d'évacuation d'un cyclone (3C, 13C) immédiatement sous un cyclone supérieur (3D, 13D) d'un préchauffeur (3, 13) d'un four à ciment (2, 12) ; et
- assèchement de déchets organiques extrêmement aqueux (W) dont la teneur en eau est égale ou supérieure à 40 % en masse en utilisant ladite partie du gaz extrait.

5. Procédé d'assèchement de déchets organiques extrêmement aqueux (W) selon la revendication 4, dans lequel ladite partie du gaz de combustion (G) est en contact direct avec les déchets organiques extrêmement aqueux (W), et les déchets organiques (W) sont séchés pendant qu'ils sont écrasés.

6. Procédé d'assèchement de déchets organiques extrêmement aqueux (W) selon la revendication 4 ou 5, comprenant en outre une étape de renvoi du gaz (G') après l'assèchement desdits déchets organiques extrêmement aqueux (W) à un conduit de gaz d'échappement (8, 20), qui s'étend du conduit d'évacuation du dispositif de calcination (4, 14) au conduit d'évacuation du cyclone (3C, 13C) immédiatement sous le cyclone supérieur (3D, 13D) du préchauffeur (3, 13) du four à ciment (2, 12).

7. Procédé d'assèchement de déchets organiques extrêmement aqueux (W) selon la revendication 4, 5 ou 6, dans lequel lesdits déchets organiques extrêmement aqueux (W) sont une boue organique extrêmement aqueuse.
